Europäisches Patentamt

European Patent Office

Office européen des brevets

(11) Publication number: **0 060 051**
**B1**

(12) **EUROPEAN PATENT SPECIFICATION**

(45) Date of publication of patent specification: **05.02.86**

(21) Application number: **82300911.3**

(22) Date of filing: **23.02.82**

(51) Int. Cl.⁴: **H 02 B 13/02**

(54) **Electrical switchgear apparatus.**

(30) Priority: **27.02.81 JP 26907/81**

(43) Date of publication of application:
**15.09.82 Bulletin 82/37**

(45) Publication of the grant of the patent:
**05.02.86 Bulletin 86/06**

(84) Designated Contracting States:
**CH DE FR LI**

(56) References cited:
**EP-A-0 002 440**
**US-A-4 035 693**
**US-A-4 045 634**

(73) Proprietor: **Kabushiki Kaisha Toshiba**
**72, Horikawa-cho Saiwai-ku**
**Kawasaki-shi Kanagawa-ken 210 (JP)**

(72) Inventor: **Kamata, Isao c/o Patent Division**
**Tokyo Shibaura Denki K.K. 72, Horikawa-cho**
**Saiwai-ku Kawasaki-shi Kanagawa-ken (JP)**
Inventor: **Ohyama, Satoshi c/o Patent Division**
**Tokyo Shibaura Denki K.K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to gas-insulated electrical switchgear apparatus.

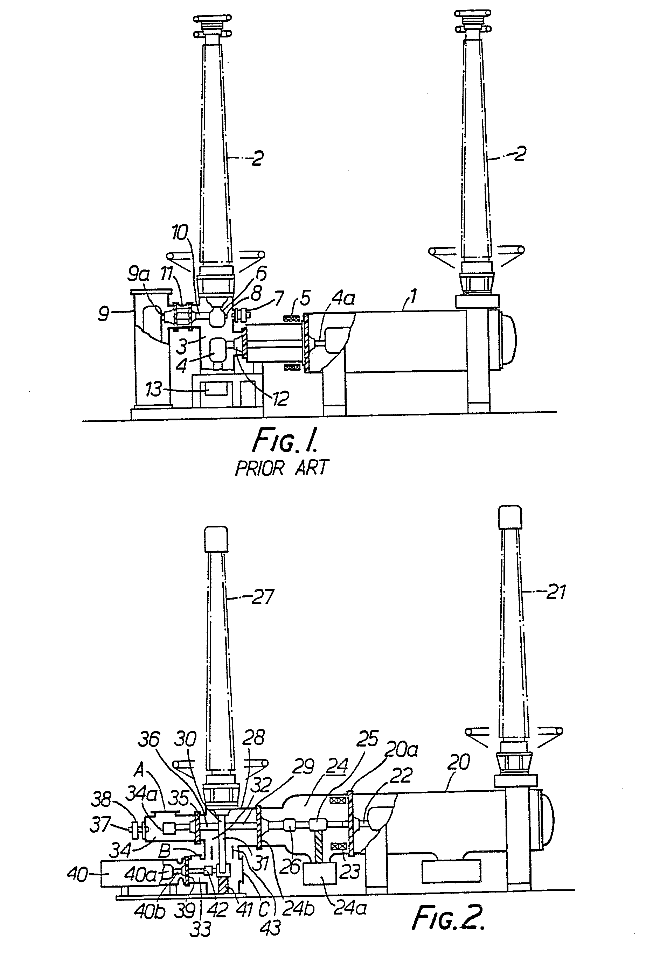

A multi-part gas-insulated electrical switchgear, referred to as a composite gas-insulated switchgear, is becoming more widely used. Such a composite gas-insulated switchgear is shown in Figure 1 of the accompanying drawing.

In the drawing, reference numeral 1 denotes a generally horizontal grounded tank containing a circuit breaker unit and a filling of insulating gas, such as $SF_6$. An insulating bushing 2 is mounted on one end of the tank and is connected to one terminal of the circuit breaker unit. A second insulating-gas filled grounded tank 3 is positioned close to the opposite end of the tank 1 from the bushing 2 and it too supports an insulating bushing 2. The tank 3 contains a disconnecting switch and one terminal part 4 of the disconnecting switch and a terminal part 4a of the breaker 1 are connected electrically through a tank surrounded by a window-type current transformer 5. Gas seals are provided between the tanks 1 and 3 and the adjacent intermediate tank. A terminal part 8 of a grounding switch is provided on a terminal part 6 connected to the bushing 2 on the tank of the disconnecting switch. A lightning arrester 9 is contained within a tank connected to the tank 3 of the disconnecting switch and a terminal part 9a of the lightning arrester is connected to the terminal part 6 of the disconnecting switch by way of a conductor 10 and an electrode 11 is part of an electrostatic device for detecting a voltage on the conductor 10.

In the construction shown, the grounding switch 7 is positioned towards the upper end of the disconnecting switch and operation of the disconnecting switch produces metal particles in the form of a fine powder and this powder drops into the tank of the disconnecting switch and becomes deposited on an insulating spacer 12 which supports one terminal part of the disconnecting switch. The metal powder deposited on the insulating spacer may eventually result in a breakdown of the spacer when the apparatus is in use. As the electrical current carrying capacity of the switchgear increases, the amount of metal powder produced at the time of induced current breaking will inevitably increase and deposit on the insulating spacer 12 and this causes a deterioration of the dielectric strength of the insulating spacer and a larger insulating spacer has to be employed than is really necessary. Furthermore, as the grounding switch 7 is mounted at a comparatively uppermost position, a special operating floor must be provided for personnel operating and inspecting the grounding switch.

EP—A—2440 discloses that it is known to locate individual units in separate gas-tight tanks. However, more relevantly, gas-insulated electrical switchgear apparatus is known from U.S. Patent Specification No. 4045634. In this specification, three insulating-gas filled grounded tanks are connected together with a gas seal between them. A circuit breaker unit is located in the first tank, a disconnecting switch is located in the second tank, and a bushing is mounted on the third tank.

The present invention is characterised over the teaching of U.S. Patent Specification No. 4045634 in that fourth and fifth tanks arranged with their longitudinal axes parallel to those of the first and second tanks are connected to the third tank on the side thereof opposite to the second tank; said fourth tank contains a grounding switch and is at a higher level than the fifth tank which contains a lightning arrester; and the third tank contains electrical conductor means which connect together the disconnecting switch and the grounding switch which are connectible to, and disconnectible from, said lightning arrester.

In order that the invention may be more readily understood, it will now be described, by way of example only, with reference to Figure 2 of the accompanying drawing which is a schematic sectional view of one embodiment of the invention.

A first grounded tank 20 is arranged horizontal and contains a filling of an insulating-gas, conveniently $SF_6$ and a circuit breaker unit (not shown). A conductor of the circuit breaker unit is connected to an insulating bushing 21 at one end of the tank 20. A terminal conductor 22 from the circuit breaker projects through an insulating gas seal 20a at the opposite end of the tank 20 from the bushing 21 into a second insulating-gas filled grounded tank 24. A disconnecting switch is arranged within the tank 24 and one terminal 25 of the switch is connected to the conductor 22 of the circuit breaker unit in tank 20. A current transformer 23 is positioned in tank 24 surrounding the current carrying conductor. The other terminal part 26 of the disconnecting switch projects through an insulating gas seal 24b which is positioned between the second tank 24 and the tank 28, supporting an insulating bushing 27. Reference 24a denotes an operating mechanism of the disconnecting switch contained in the tank 24.

The bushing support tank 28 includes a part which is an axial extension of the tanks 24 and 20 so that it can be said that the circuit breaker unit in the tank 20, the disconnecting switch in the tank 24 and part of the bushing support tank 28 are arranged in alignment with each other. The bushing support tank 28 is basically of a longitudinal form extending perpendicular to this alignment of the tanks 20 and 24 and it has the bushing 27 provided at its upper end. Two openings 32, 33 have their axes normal to the axis of a conductor 30 connected to the central conductor of the bushing 27 and these openings are provided on the side of the bushing support tank which is away from the disconnecting switch 24. The axis of the opening 32 is in alignment with the axes of the tanks 20 and 24.

A fourth tank 34 containing a grounding switch is connected around the opening 32 with an insulating gas seal 35 between the tanks 34 and 28. A fixed contact 34a of the grounding switch is connected to the centre conductor 30 of the bushing 27 by way of a conductor 36 and the conductor 30 is also connected to the other terminal part 26 of the disconnecting switch by way of a conductor 29. The tank 34 contains a filling of electrically insulating gas and a moving contact is driven by an operating mechanism 37 and an operating mechanism 38 is arranged opposite to the fixed contact 34a.

A further tank 40 is connected around the opening 33 with an insulating gas seal 39 between the tanks 40 and 28. A lighting arrester element 40a is enclosed in the tank 40 together with a filling of electrically insulating gas and a conductor 40b from the element extends through the seal into the tank 28. The central conductor 30 of the bushing is extended by way of a conductor 31 and the free end of this conductor is supported by an insulator 41. The conductor 31 and the conductor 40b from the lightning arrester 40a are connected through a detachable conductor 42.

In Figure 2 of the drawing, references A, B and C denote inspection holes in the various tanks which are covered with detachable covers and these enable inspection of the fixed contact 34a of the grounding switch and of the detachable conductor 42. Furthermore, reference 43 denotes an electrode arranged around the conductor 31 concentrically therewith and serves as one plate of a capacity-type voltage measuring device.

The above described form of construction is effective to cope with the large capacity circuit breaker units developed recently. Namely, the number of breaking points may be reduced to half by an improvement of the breaking performance. For example, the situation is such that the number of breaking points is reduced from 2 to 1 for 300 KV class and from 4 to 2 for 550 KV class. This suggests that the axial length of the tank of the breaker 20 can be shortened. However, when the breaker is used on its own, the bushings 21, 27 will have to be mounted on the tank slantwise to secure the necessary separation between the outer ends of the bushings. However, in a composite switchgear, the bushings need not be provided slantwise, as several components will be arranged between the bushings. Namely, it is easy to provide the bushings perpendicularly to the breaker tank axis for strength and also for strength of openings for the bushings to provide, and further a manufacture of the tank is facilitated. Then, the necessary clearance between the bushings can be secured by arranging the disconnector in the middle of the bushings. For example, when the bushings are provided on the disconnector in 550 KV and 2-point breaking class, the clearance is given at 4.5 m or so, which is shorter than the minimum requirement in 5 m for insulation, however, when the bushings are provided on the bushing support tank 28, the clearance may cover 6 m or so to comply with the requirement. The disconnecting switch and the grounding switch are isolated in separate tanks and, even if the dust or metal powder produced on operation increases consequently, however, since it is isolated from the disconnecting switch, the dust will never pollute the insulator surface. The reliability of the performance of the insulation will increase. Since the grounding switch is arranged to be linear with the breaker, disconnecting switch and bushing support tank, therefore support level of the bushing 27 can be lowered, and a better strength is obtained. The conductor 42 by which the lightning arrester is connected is provided in the bushing support tank 28, and is made detachable, therefore a severe voltage stress can be prevented from being impressed on the element 40a of the lightning arrester by disconnecting the conductor 42 at the time of impulse voltage tests carried out immediately after manufacture and after installation on site, thus preventing the element 40a from deterioration. Furthermore, the lightning arrester is arranged in the lower part of the bushing support tank 28, i.e. below the grounding switch 34a, thereby simplifying the support of the heavy lightning arrester 40a.

According to the construction shown in Figure 2, electrical switchgear apparatus has the necessary separation between the bushings, a bus part is not particularly required, the system can be reduced in size as a whole, the bushings on both ends are arranged linearly, which is preferable in respect of arrangement for a substation generally.

**Claims**

1. Electrical switchgear apparatus comprising a first insulating-gas filled grounded tank (20) containing a circuit breaker unit;
a second insulating-gas filled grounded tank (24) connected in end-to-end relation with the first tank with their longitudinal axes aligned and with a gas seal between them;
a disconnecting switch (25) in said second tank;
a third insulating-gas filled grounded tank (28) connected to the second tank on the side thereof opposite to the first tank and with a gas seal between them;
characterised in that fourth (34) and fifth (40) tanks arranged with their longitudinal axes parallel to those of the first and second tanks are connected to the third tank on the side thereof opposite to the second tank; said fourth tank contains a grounding switch (34a) and is at a higher level than the fifth tank which contains a lightning arrester (40a); and the third tank contains electrical conductor means which connect together the disconnecting switch and the grounding switch which are connectible to, and disconnectible from, said lightning arrester.

2. Electrical switchgear apparatus as claimed in claim 1, characterised in that both the fourth and the fifth tanks are separated from the third tank by gas seals (35, 39).

3. Electrical switchgear as claimed in claim 1 or 2, characterised in that first and second insulating bushings (21, 27) are mounted on said first and third tanks, respectively.

4. Electrical switchgear apparatus as claimed in any preceding claim, characterised in that said third and fourth tanks each have removable inspection covers (C, A) to give acess to the interior of the tank.

## Patentansprüche

1. Elektrische Schaltvorrichtung mit einem isoliergasgefüllten, geerdeten Behälter (20), in dem ein Leistungsschalter angeordnet ist, einem isoliergasgefüllten, geerdeten Behälter (24), der an den Behälter (20) anschließt, wobei deren Längsachsen aufeinander ausgerichtet sind und zwischen denen ein Gasverschluß vorgesehen ist, einem Trennschalter (25) im Behälter (24), und einem isoliergasgefüllten, geerdeten Behälter (28), der an der, dem Behälter (20) gegenüberliegenden Seite under Zwischenschaltung eines Gasverschlusses mit dem Behälter (24) verbunden ist, dadurch gekennzeichnet, daß Behälter (34 und 40) vorgesehen sind, die mit ihren Längsachsen parallel zu den Längsachsen der Behälter (20 und 24) ausgerichtet sind und an der dem Behälter (24) gegenüberliegenden Seite mit dem Behälter (28) verbunden sind, daß im Behälter (34) ein Erdungsschalter (34a) und im Behälter (40) ein Blitzableiter (40a) vorgesehen ist, daß der Behälter (34) auf höherem Potential als der Behälter (40) liegt, und daß der Behälter (28) eine elektrische Leitvorrichtung aufweist, die den Trennschalter (25) und den Erdungsschalter (34a) miteinander verbindet und die die Schalter (25 und 34a) mit dem Blitzableiter (40a) verbinden bzw. trennen kann.

2. Elektrische Schaltvorrichtung nach Anspruch 1, dadurch gekennzeichnet, daß jeder der Behälter (34 und 40) durch Gasverschlüsse (35 bzw. 39) vom Behälter (28) getrennt ist.

3. Elektrische Schaltvorrichtung nach Anspruch 1, dadurch gekennzeichnet, daß jeweils eine Isolierbuchse (21 bzw. 27) an den Behältern (20, 28) angebracht ist.

4. Elektrische Schaltvorrichtung nach mindestens einem der Ansprüche 1 bis 3, dadurch gekennzeichnet, daß jedem Behälter (28) und (34) eine abnehmbare Inspektionsabdeckung (C bzw. A) zugeordnet ist, die einen Zugang zum Inneren des jeweiligen Behälters ermöglicht.

## Revendications

1. Dispositif d'appareillage de commutation électrique comprenant, remplie de gaz d'isolation, contenant une unité d'interrupteur, une première cuve (20), mise à la terre, remplie de gaz d'isolation, contenant une unité d'interrupteur, une deuxième cuve (24), mise à la terre, remplie de gaz d'isolation, reliée en relation d'extrémité à extrémité à la première cuve, leurs axes longitudinaux étant alignés et avec un joint étanche aux gaz entre elles; un disjoncteur (25) dans ladite deuxième cuve; une troisième cuve (28), mise à la terre, remplie de gaz d'isolation, reliée à la deuxième cuve du côté de celle-ci opposé à la première cuve et avec un joint étanche aux gaz entre elles; caractérisé en ce qu'une quatrième (34) et une cinquième (40) cuves, disposées avec leurs axes longitudinaux parallèles à ceux de la première et de la deuxième cuve, sont reliées à la troisième cuve cu côté de celle-ci opposé à la deuxième cuve; ladite quatrième cuve contient un commutateur de mise à la terre (34a) et est à un niveau plus élevé que la cinquième cuve qui contient un parafoudre (40a); et la troisième cuve contient des moyens conducteurs électriques reliant l'un à l'autre le disjoncteur et le commutateur de mise, à la terre qui peuvent être connectés audit parafoudre, et déconnectés de lui.

2. Dispositif d'appareillage de commutation électrique, selon la revendication 1, caractérisé en ce que la quatrième et la cinquième cuves sont toutes deux séparées de la troisième cuve par des joints étanches aux gaz (35, 39).

3. Appareillage de commutation électrique, selon la revendication 1 ou 2, caractérisé en ce qu'un première et un second isolateurs de traversée (21, 27) sont respectivement montés sur ladite première cuve et sur ladite troisième cuve.

4. Dispositif d'appareillage de commutation électrique, selon l'une quelconque des revendications précédentes, caractérisé en ce que ladite troisième cuve et ladite quatrième cuve ont chacune des couvercles d'inspection (C, A) amovibles pour donner accès à l'intérieur de la cuve.

0 060 051

FIG. 1.
PRIOR ART

FIG. 2.

1